# EUROPEAN PATENT SPECIFICATION

(11) **EP 0 395 594 B1**
(45) Date of publication and mention of the grant of the patent: **18.05.1994**
(21) Application number: 90830157.5
(22) Date of filing: 10.04.1990
(51) Int. Cl.: B60T 8/00

(54) **A system and method for controlling the operation of an antilock braking device for a vehicle**
System und Verfahren zur Steuerung der Wirkung einer Blockierschutz-Bremsvorrichtung für ein Fahrzeug
Système et procédé pour commander l'opération d'un dispositif de freinage à antiblocage pour un véhicule

(30) Priority: 18.04.1989 IT 6728289
(43) Date of publication of application: 31.10.1990
(73) Proprietor: FIAT AUTO S.p.A., 10135 Torino (IT)
(72) Inventor: Formento, Gianfelice, I-10134 Torino (IT)
(74) Representative: Quinterno, Giuseppe

(56) References cited:
- EP-A- 0 078 655
- EP-A- 0 180 096
- EP-A- 0 340 634
- US-A- 3 977 733

## Description

The present invention relates to a system and a method for controlling the operation of the brakes of a motor-vehicle provided with an antilock braking device, according to the first parts of Claims 1 and 5 respectively.

A system and a method of this kind are disclosed in US-A-3 977 733.

The purpose of antilock braking systems is to prevent the wheels from locking during braking in order to ensure the greatest possible deceleration consistent with the coefficient of traction between the wheels and the road surface.

In order to describe the present invention, it is sufficient to explain that known antilock braking systems operate in the following manner: the individual wheels are provided with angular velocity sensors, for example, of the so-called phonic wheel type. Incidentally, simpler antilock braking systems may have only one phonic wheel coupled to only one of the four wheels.

The signals provided by the angular velocity sensors are sent to a central control unit; when, in the event of braking, the braking moment applied to the wheel by the brake exceeds the resisting moment applied by the road surface to the wheel and determined by the traction coefficient, the wheel begins to lock and slip on the ground, thus losing braking efficiency. As soon as the control unit detects the locked condition of one or more wheels, it sends a signal to an actuator to reduce the braking pressure (hydraulic or pneumatic) in order to reduce the braking force and thus prevent the wheels from locking. The various ways in which conventional antilocking systems act in order to modulate the variations in pressure in the braking circuit will not be examined herein since they are not relevant for the purposes of a description of the present invention.

With antilock braking systems, the following situation may occur: in the event of sharp acceleration on slippery surfaces, the driving wheels may slip with a consequent reduction in the longitudinal acceleration of the car; the driver then releases the accelerator pedal and after a short time the wheels regain traction as a result of the consequent deceleration. At this point, the driver can start to accelerate again. However, if it becomes necessary to brake during the stage of the release of the accelerator and the subsequent regaining of traction by the wheels, the antilock braking system may, on the basis of its logic as described above, interpret the sharp deceleration of the wheels as a loss of traction due to braking and, in this case, may reduce the braking action. The result is a time interval (1-2 seconds) during which the car cannot be braked efficiently with regard to the traction coefficient of the surface.

The above outlined problem has been solved according to US-A-2 977 733 by modifying the control circuitry of a conventional antilock braking system in such a way that after the occurrence of a wheel slippage condition during an engine acceleration phase the period of time in which the wheels are without braking capacity is reduced.

The object of the present invention is that of providing an improved system and method for overcoming the above problem.

This object is achieved according to the invention by means of a system and a method having the further characteristics corresponding to the second parts of Claims 1 and 5 respectively.

The dependent claims give some advantageous solutions of the control system according to the invention.

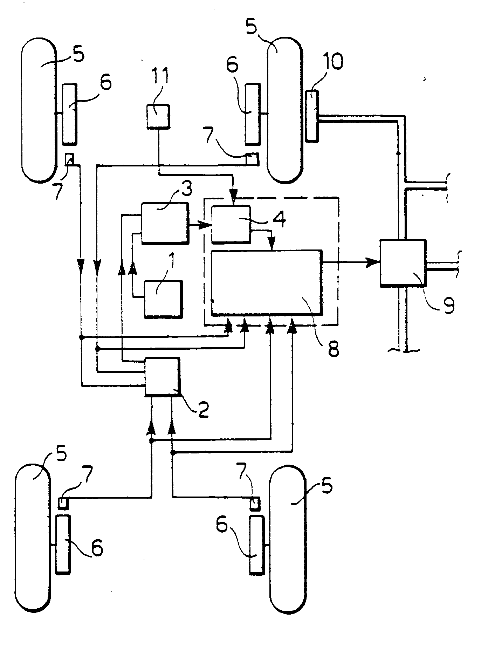

Further characteristics and advantages of the invention will become clear with reference to the appended drawing, the single figure of which shows a block diagram of an antilock braking device with a control system according to the invention.

The antilock braking device is of known type and includes a sensor associated with each wheel 5 for generating an electrical signal indicative of the angular velocity of the wheel 5. The sensor may, for example, consist of toothed wheel 6 fast for rotation with the wheel 5 and a fixed electromagnet 7, constituting a so-called phonic wheel. The electromagnet 7 generates an electrical signal with a frequency proportional to the rate of rotation of the wheel. This signal is sent to an electronic control unit 8 which can generate a suitable signal for operating an actuator 9 situated in the braking circuit, which reduces the braking action of the brake 10 (shown, for simplicity, for only one of the wheels 5).

The system for controlling the operation of an antilock braking device for four-wheel-drive vehicles comprises an accelerometer 1 which measures the acceleration of the vehicle along its longitudinal axis, a processor 2 which calculates an average value of the angular accelerations of the wheels 5 derivable from the signals provided by the electromagnets 7, and a comparator 3 which compares the longitudinal acceleration of the car with the average angular acceleration of the wheels. An electronic control unit for controlling the system is indicated 4. Structurally, the unit 4 may form part of the control unit 8 of the antilock braking system, as represented schematically by the block shown in broken outline in the drawing.

The term "average value" is not intended to be restricted, for example, to just arithmetical average values; the function by which the acceleration of each individual wheel 5 at a particular time contributes to the average value obtained may be more complex, in order to optimise the response of the control system according to the invention by its adaptation to the actual road-holding conditions of use of the car.

The comparator 3 constantly compares the average angular acceleration of the wheels with the value of the longitudinal acceleration of the car provided by the longitudinal accelerometer 1. During a sharp acceleration with loss of traction and consequent wheel-slip, the average angular acceleration of the wheel increases considerably whilst the longitudinal acceleration of the car tends to decrease.

The control unit 4 is arranged to recognise this situation, for example, by comparing the ratio between the accelerations with a predetermined threshold value. If it is necessary to brake during this situation, the system momentarily de-activates the anti-lock braking device and consequently enables the car to be braked conventionally.

According to the invention, a sensor 11 indicative of a braking requirement may also be associated with the electronic control unit 4; this may, for example, be a switch associated with the brake pedal (and/or with the handbrake lever) or a pressure switch associated with the hydraulic or pneumatic braking circuit. By means of this sensor 11, it is possible to provide a system for controlling the antilock braking device, in which, once the aforementioned predetermined threshold value has been reached, the antilocking device is only de-activated when the brake pedal is pressed.

The antilock braking system is reactivated by the control unit 4 when the speed of the wheels approaches zero, or in any case after a time interval which is defined experimentally so as to be as short as possible. The threshold value of the angular velocity of the wheels at which the antilock braking system is re-engaged is preferably that which corresponds to the angular velocity of the wheels in first gear with the engine running at 1000-1500 r.p.m.

The system therefore intervenes only when necessary, allowing the antilock braking system to operate in all other cases.

The invention has been described with reference to vehicles having antilock braking systems with four phonic wheels, but the operating principle of the control system according to the invention could obviously also be applied to vehicles with either rear-wheel or front-wheel drive only or with four-wheel-drive and also to vehicles with only one phonic wheel.

The longitudinal accelerometer 1 may be provided with devices for its calibration in relation to the loading conditions of the car, for example, for a fully-loaded car or an unladen car. In this way, the conditions for intervention of the control system according to the invention may be optimised for all possible uses of the car.

## Claims

1. A system for controlling the operation of the brakes (10) of a four-wheel drive, rear-wheel drive or front-wheel drive vehicle provided with an antilock braking device (6-9) including means (6, 7) for sensing the angular velocity of the wheels (5), an antilock control unit (8) capable of causing the release of the brakes (10);
the system being characterized by
first sensor means (1-3) for generating electrical signals upon occurrence of wheel slippage during acceleration of the vehicle,
second sensor means (11) for generating an electrical signal upon operation of the brakes (10), and
control means (4) coupled to said first and second sensor means (1-3; 11) and adapted to deactivate said antilock control unit (8) when said first and second sensor means (1-3; 11) output their respective signals.

2. A system according to Claim 1, characterised in that the first sensor (1, 2, 3) comprise means (1) for sensing the longitudinal acceleration of the vehicle, means (2) for calculating an average angular acceleration of the wheels (5), and means (3) for comparing the longitudinal acceleration of the car with the average angular acceleration of the wheels (5), and in that the control means (4) comprise a control unit (4) arranged to generate a deactivation signal when the ratio or difference between the longitudinal acceleration of the vehicle and the average angular acceleration of the wheels (5) has reached a predetermined threshold value.

3. A system according to Claim 1 or Claim 2, characterised in that said second sensor means (11) comprise a position sensor coupled to the brake pedal is pressed.

4. A system according to any one of the preceding claims,
characterised in that it includes means for re-activating the antilock braking device (6-9) in dependence on the wheels (5) reaching an angular velocity close to zero.

5. A method for controlling the operation of the brakes (10) of a four-wheel drive, rear-wheel drive or front-wheel drive vehicle provided with an antilock braking device (6-9) by means of a control system according to claim 1, including the steps of measuring the angular velocities of the wheels (5) for causing the release of the brakes (10) in predetermined conditions;
the method being characterised by generating a first electrical signal upon occurrence of wheel slippage during acceleration of the vehicle,
generating a second electrical signal upon operation of the vehicle brakes (10), and
deactivating the antilock braking device (6-9) when said first and second electrical signals are generated.

6. A method according to Claim 5,
characterised in that it includes the steps of measuring the longitudinal component of the acceleration of the vehicle, calculating (2) an average value of the angular acceleration of the wheels (5), and deactivating the antilock braking device (6-9) when the ratio or difference measured between the longitudinal component of the acceleration of the vehicle and the average angular acceleration of the wheels (5) reaches a predetermined threshold value.

7. A method according to Claim 5 or Claim 6,
characterised in that the antilock braking device is de-activated when the brake pedal is pressed.

8. A method according to any one of Claims 5 to 7,
characterised in that, once the antilock braking device (6-9) has been de-activated, it is re-activated as soon as the angular velocity of the wheels (5) approaches zero.

## Patentansprüche

1. System zur Steuerung der Funktion der Bremsen (10) eines Fahrzeugs mit Allradantrieb, Hinterradantrieb oder Vorderradantrieb, das mit einem Antiblockier-Bremssystem (6-9) einschließlich Einrichtungen (6, 7) zum Messen der Winkelgeschwindigkeit der Räder (5), einer Antiblockier-Steuereinheit (8), die in der Lage ist, die Bremsen (10) zu lösen, versehen ist;
wobei das System **gekennzeichnet ist durch:**
eine erste Sensoreinrichtung (1-3), die beim Auftreten von Radrutschen während der Beschleunigung des Fahrzeugs elektrische Signale erzeugt,
eine zweite Sensoreinrichtung (11), die bei Betätigung der Bremsen (10) ein elektrisches Signal erzeugt, und
eine Steuereinrichtung (4), die mit der ersten und der zweiten Sensoreinrichtung (1-3; 11) verbunden ist und die Antiblockier-Steuereinheit (8) deaktiviert, wenn die erste und die zweite Sensoreinrichtung (1-3; 11) ihre entsprechenden Signale ausgeben.

2. System nach Anspruch 1, **dadurch gekennzeichnet,** daß der erste Sensor (1, 2, 3) eine Einrichtung (1) zum Messen der Längsbeschleunigung des Fahrzeugs umfaßt, eine Einrichtung (2) zum Errechnen einer mittleren Winkelbeschleunigung der Räder (5), sowie eine Einrichtung (3), die die Längsbeschleunigung des Fahrzeugs mit der mittleren Winkelbeschleunigung der Räder (5) vergleicht, und dadurch, daß die Steuereinrichtung (4) eine Steuereinheit (4) umfaßt, die ein Deaktivierungssignal erzeugt, wenn das Verhältnis oder die Differenz zwischen der Längsbeschleunigung des Fahrzeugs und der mittleren Winkelbeschleunigung der Räder (5) einen vorgegebenen Schwellenwert erreicht hat.

3. System nach Anspruch 1 oder Anspruch 2, **dadurch ge****kennzeichnet,** daß die zweite Sensoreinrichtung (11) einen Positionssensor umfaßt, der mit dem Bremspedal verbunden ist.

4. System nach einem der vorangehenden Ansprüche, **dadurch** **gekennzeichnet,** daß es eine Einrichtung enthält, die die Antiblockier-Bremsvorrichtung (6-9) dann wieder aktiviert, wenn die Räder (5) eine Winkelgeschwindigkeit nahe Null erreichen.

5. Verfahren zur Steuerung der Funktion der Bremsen (10) eines Fahrzeugs mit Allradantrieb, Hinterradantrieb oder Vorderradantrieb, das mit einer Antiblockier-Bremsvorrichtung (6-9) versehen ist, mittels eines Steuersystems nach Anspruch 1, das die Schritte des Messens der Winkelgeschwindigkeiten der Räder (5) umfaßt, um das Lösen der Bremsen (10) unter vorgegebenen Bedingungen zu bewirken;
wobei das Verfahren **gekennzeichnet ist durch:**
die Erzeugung eines ersten elektrischen Signals beim Auftreten von Radrutschen während der Beschleunigung des Fahrzeugs,
das Erzeugen eines zweiten elektrischen Signals bei Betätigung der Fahrzeugbremsen (10), und
das Deaktivieren der Antiblockier-Bremsvorrichtung (6-9) bei Erzeugung des ersten und des zweiten elektrischen Signals.

6. Verfahren nach Anspruch 5, **dadurch gekennzeichnet**, daß es die Schritte des Messens der Längskomponente der Beschleunigung des Fahrzeugs enthält, des Errechnens (2) eines Mittelwertes der Winkelbeschleunigung der Räder (5) und des Deaktivierens der Antiblockier-Bremsvorrichtung (6-9), wenn das Verhältnis oder die Differenz, die zwischen der Längskomponente der Beschleunigung des Fahrzeugs und der mittleren Winkelbeschleunigung der Räder (5) gemessen wird, einen vorgegebenen Schwellenwert erreicht.

7. Verfahren nach Anspruch 5 oder Anspruch 6, **dadurch ge****kennzeichnet,** daß die Antiblockier-Bremsvorrichtung deaktiviert wird, wenn das Bremspedal gedrückt wird.

8. Verfahren nach einem der Ansprüche 5 bis 7, **dadurch** **gekennzeichnet,** daß, wenn das Antiblockier-Bremssystem (6-9) deaktiviert worden ist, es wieder aktiviert wird, sobald die Winkelgeschwindigkeit der Räder (5) gegen Null geht.

## Revendications

1. Système de commande du fonctionnement des freins (10) d'un véhicule à quatre roues motrices, à propulsion ou à traction avant muni d'un dispositif de freinage à antiblocage (6 à 9) comprenant des moyens (6, 7) pour la détection de la vitesse angulaire des roues (5), une unité de commande d'antiblocage (8) pouvant provoquer la libération des freins (10);
système caractérisé par :
- un premier moyen de capteur (1 à 3) pour générer des signaux électriques lors d'un patinage de roue pendant une accélération du véhicule;
- un second moyen de capteur (11) pour générer un signal électrique lors de l'actionnement des freins (10); et
- un moyen de commande (4) couplé auxdits premier et second moyens de capteur (1 à 3; 11) et prévu pour désactiver ladite unité de commande d'antiblocage (8) lorsque lesdits premier et second moyens de capteur (1 à 3; 11) génèrent leurs signaux respectifs.

2. Système selon la revendication 1, caractérisé en ce que le premier capteur (1, 2, 3) comprend un moyen (1) pour détecter l'accélération longitudinale du véhicule, un moyen (2) pour calculer une accélération angulaire moyenne des roues (5) et un moyen (3) pour comparer l'accélération longitudinale du véhicule avec l'accélération angulaire moyenne des roues (5) et en ce que le moyen de commande (4) comprend une unité de commande (4) prévue pour générer un signal de désactivation lorsque le rapport ou la différence entre l'accélération longitudinale du véhicule et l'accélération angulaire moyenne des roues (5) a atteint une valeur de seuil prédéterminée.

3. Système selon la revendication 1 ou 2, caractérisé en ce que ledit second moyen de capteur (11) comprend un capteur de position couplé à la pédale de freinage.

4. Système selon l'une quelconque des revendications précédentes, caractérisé en ce qu'il comprend un moyen pour la réactivation du dispositif de freinage à antiblocage (6 à 9) selon les roues (5) atteignant une vitesse angulaire proche de zéro.

5. Procédé de commande du fonctionnement des freins (10) d'un véhicule à quatre roues motrices, à propulsion ou à traction avant, muni d'un dispositif de freinage à antiblocage (6 à 9) au moyen d'un système de commande selon la revendication 1, comprenant des étapes de mesure des vitesses angulaires des roues (5) pour provoquer la libération des freins (10) dans des conditions prédéterminées;
procédé caractérisé par :
- la génération d'un premier signal électrique lors d'un patinage de roue pendant l'accélération du véhicule;
- la génération d'un second signal électrique lors de l'actionnement des freins du véhicule (10); et
- la désactivation du dispositif de freinage à antiblocage (6 à 9) lorsque lesdits premier et second signaux électriques sont générés.

6. Procédé selon la revendication 5, caractérisé en ce qu'il comprend des étapes de mesure de la composante longitudinale de l'accélération du véhicule, de calcul (2) d'une valeur moyenne de l'accélération angulaire des roues (5) et de désactivation du dispositif de freinage à antiblocage (6 à 9) lorsque le rapport ou la différence mesuré entre la composante longitudinale de l'accélération du véhicule et l'accélération angulaire moyenne des roues (5) atteint une valeur de seuil prédéterminée.

7. Procédé selon la revendication 5 ou 6, caractérisé en ce que le dispositif de freinage à antiblocage (6 à 9) est désactivé lorsque la pédale de freinage est pressée.

8. Procédé selon l'une quelconque des revendications 5 à 7, caractérisé en ce qu'une fois que le dispositif de freinage à antiblocage (6 à 9) a été désactivé, il est réactivé dès que la vitesse angulaire des roues (5) s'approche de zéro.
